# EUROPEAN PATENT SPECIFICATION

(11) **EP 1 853 672 B1**
(45) Date of publication and mention of the grant of the patent: **07.01.2009**
(21) Application number: 06736642.7
(22) Date of filing: 28.02.2006
(51) Int. Cl.: C09D 7/12, C09D 123/00

(54) **PROCESS FOR COATING**
BESCHICHTUNGSVERFAHREN
PROCEDE DE REVETEMENT

(30) Priority: 02.03.2005 US 70710
(43) Date of publication of application: 14.11.2007
(73) Proprietor: E.I. DU PONT DE NEMOURS AND COMPANY, Wilmington, DE 19898 (US)
(72) Inventor: CHERNYSHOV, Dimitry, 42281 Wuppertal (DE); WULF, Martin, 40764 Langenfeld (DE)
(74) Representative: Biering, Christine
(86) International application number: PCT/US2006/007361
(87) International publication number: WO 2006/094092

(56) References cited:
- EP-A- 0 648 822
- US-A- 6 140 326
- US-A1- 2003 054 118

## Description

### Field of the Invention

The invention relates to a process for coating with coating agents that are curable by free-radical polymerization of olefinic double bonds.

### Background of the Invention

The use of coating agents curable by ultraviolet light (UV) irradiation and based on binders capable of free-radical polymerization is known in automotive and industrial coating; cf. U.S. 5,425,970 and U.S. 5,486,384. Coatings prepared in this way are characterized by outstanding chemical and mar resistance, properties that are particularly desirable for exterior top coat, clear coat or sealing layers.

Coating agents used for the preparation of coating layers for exterior or high-grade interior applications contain light stabilizers based on radical scavengers from the group of sterically hindered amines (so-called HALS compounds, HALS = hindered amine light stabilizer), in particular from the group of sterically hindered piperidines, generally in combination with UV absorbers, in order to guarantee a long service life of coating layers produced therefrom. This also applies to coating agents capable of free-radical polymerization under UV irradiation.

Whereas the curing of coating agents capable of free-radical polymerization and containing HALS compounds takes place without problems under UV irradiation, curing by thermally induced free-radical polymerization takes place only incompletely, if at all, in the case of HALS compounds of the sterically hindered piperidine type. Thermal curing is possible if HALS compounds of the sterically hindered piperidine type are dispensed with in the coating agent, but leads to a coating with only a limited service life under the action of UV rays, as is the case, in particular, in exterior applications.

If there were not the problem of the limited service life, it would be inherently desirable to use coating agents that are cured thermally by free-radical polymerization of olefinic double bonds in coating, particularly industrial coating, for example, automotive coating, because of the outstanding properties of the coating layers produced therewith, and the possibility of being able to use these in conventional coating plants equipped for the application of thermally curing coating agents. In short, it would be possible to provide substrates, particularly industrially produced substrates, such as, automotive bodies, with coatings that have the outstanding range of technological properties of weather-resistant coatings chemically cross-linked under UV irradiation by free-radical polymerization of olefinic double bonds without having to use UV curing technology.

Surprisingly, coating layers with a long service life, even when exposed to UV rays, may be prepared if they are applied from coating agents capable of free-radical polymerization, containing not only HALS compounds, in particular, HALS compounds of the sterically hindered piperidine type, but also certain metal compounds, and are thermally cured.

U.S. 6,582,770 B2 discloses the preparation of a cured coating layer containing a HALS compound of the 3,3,5,5-polysubstituted morpholine-2-one type. The coating layer is applied from a coating agent containing a binder system capable of free-radical polymerization and cured by thermally induced free-radical polymerization. It has been found, that even here an improvement in cross-linking can be achieved, if certain metal compounds are added into the coating agent used to apply the coating layer.

### Summary of the Invention

The invention provides a process for the preparation of a coating layer comprising the steps:
(a) applying a coating layer to a substrate from a coating agent of which the resin solids comprise a binder system curable by free-radical polymerization of olefinic double bonds; and
(b) thermal curing of the applied coating layer,
wherein the coating agent contains at least one HALS compound and at least one metal compound selected from the group consisting of metal salt compounds containing the metal in the cation and/or anion of the compound, organometallic compounds, metal coordination compounds and combinations thereof, wherein said metal or metals is/are selected from the group consisting of metals of groups 13 and 14 of the periodic system of elements and transition metals, which metals or transition metals are able to occur in at least 2 oxidation states other than zero.

### Detailed Description of the Embodiments

The coating agent applied in step a) of the process according to the invention is also referred to hereinafter as "coating agent" for brevity.

The resin solids of the coating agent are composed of i) a binder system chemically cross-linkable by free-radical polymerization of olefinic double bonds (hereinafter also referred to as "binder system capable of free-radical polymerization" for brevity) and optionally ii) components not capable of free-radical polymerization. The resin solids have an olefinic double bond content corresponding to a C=C-equivalent weight of from 300 to 10,000, preferably from 350 to 3,000, more particularly from 400 to 1,500.

The binder system capable of free-radical polymerization is composed of one or more binders capable of free-radical polymerization and optionally, one or more reactive thinners (reactive diluents) capable of free-radical polymerization.

The optionally contained components not capable of free-radical polymerization are one or more binders not capable of free-radical polymerization, one or more reactive thinners not capable of free-radical polymerization and/or one or more hardeners not capable of free-radical polymerization.

The binder system capable of free-radical polymerization is a binder system of the kind that is also conventionally used in coating agents chemically cross-linkable under UV irradiation by free-radical polymerization of olefinic double bonds. Such binder systems are known to a person skilled in the art. They contain one or more binders with olefinic double bonds capable of free-radical polymerization. Suitable binders with olefinic double bonds capable of free-radical polymerization include, for example, all the binders known to the skilled person that can be cross-linked by free-radical polymerization of olefinic double bonds. These binders are prepolymers, such as, polymers and oligomers which contain, per molecule, one or more, preferably, on average 2 to 20, particularly preferably, 3 to 10 olefinic double bonds capable of free-radical polymerization. The polymerizable double bonds may be present, for example, in the form of (meth)acryloyl, vinyl, allyl, maleinate and/or fumarate groups. The double bonds capable of free-radical polymerization are particularly preferably present in the form of (meth)acryloyl, vinyl, and/or maleinate groups.

Examples of prepolymers or oligomers include (meth)acryloyl-functional (meth)acrylic copolymers, polyurethane (meth)acrylates, polyester (meth)acrylates, unsaturated polyesters, polyether (meth)acrylates, silicone (meth)acrylates and epoxy resin (meth)acrylates having number-average molecular masses from, for example, 500 to 10,000, preferably 500 to 5,000.

The term (meth)acryl as used in the description and the claims should be taken to mean methacryl and/or acryl.

All molecular masses (both number and weight average molecular mass) referred to herein are determined by GPC (gel permeation chromatography) using polystyrene as the standard, unless otherwise stated.

The binder system chemically cross-linkable by free-radical polymerization of olefinic double bonds may contain one or more reactive thinners with olefinic double bonds capable of free-radical polymerization. The reactive thinners are low molecular weight compounds with a molecular mass of below 500. The reactive thinners may be mono-, di- or polyunsaturated. Examples of monounsaturated reactive thinners include (meth)acrylic acid and the esters thereof, maleic acid and the half esters thereof, vinyl acetate, vinyl ethers, styrene, vinyl toluene. Examples of diunsaturated reactive thinners include di(meth)acrylates, such as, alkylene glycol di(meth)acrylate, polyethylene glycol di(meth)acrylate, butane 1,3-diol di(meth)acrylate, vinyl (meth)acrylate, allyl (meth)acrylate, divinyl benzene, dipropylene glycol di(meth)acrylate, hexane diol di(meth)acrylate. Examples of polyunsaturated reactive thinners include glycerol tri(meth)acrylate, trimethylol propane tri(meth)acrylate, pentaerythritol tetra(meth)acrylate.

Both the binders capable of free-radical polymerization and the reactive thinners capable of free-radical polymerization may contain, in addition to the olefinic double bonds, one or more further, identical or different functional groups. Examples of functional groups include hydroxyl, isocyanate (optionally blocked), N-methylol, N-methylolether, ester, carbamate, epoxy, amino (optionally blocked), acetoacetyl, alkoxysilyl and carboxyl groups.

This will be explained on the basis of the example of binders and reactive thinners capable of free-radical polymerization, in each case having hydroxyl groups as functional groups present in addition to the olefinic double bonds. For example, polyurethane resins with (meth)acryloyl and hydroxyl groups are binders capable of free-radical polymerization having hydroxyl groups as further functional groups. Examples of corresponding reactive thinners capable of free-radical polymerization having hydroxyl groups include compounds, such as, glycerol mono-and di(meth)acrylate, trimethylol propane mono-and di(meth)acrylate or pentaerythritol tri(meth)acrylate.

The functional groups may be used for an additional chemical cross-linking of the coating layer applied from the coating agents as well as the chemical cross-linking by free-radical polymerization of olefinic double bonds. Addition and/or condensation reactions are suitable as additional chemical cross-linking mechanisms. If the binders capable of free-radical polymerization or the reactive thinners capable of free-radical polymerization are furnished with functional groups, such addition and/or condensation reactions may be possible within individual binders capable of free-radical polymerization or between binders capable of free-radical polymerization and/or reactive thinners capable of free-radical polymerization. If one or more of such chemical cross-linking mechanisms is present in addition to the cross-linking mechanism by free-radical polymerization, the term dual-cure coating agent is used.

The addition and/or condensation reactions mentioned in the paragraph above are coating chemistry cross-linking reactions known to the skilled person between functional groups with complementary reactivity such as, the ring-opening addition of an epoxy group to a carboxyl group with the formation of an ester and an hydroxyl group, the addition of an hydroxyl group to an isocyanate group with the formation of a urethane group, the addition of an optionally blocked amino group to an isocyanate group with the formation of a urea group, the reaction of an hydroxyl group with a blocked isocyanate group with the formation of a urethane group and dissociation of the blocking agent, the reaction of an hydroxyl group with an N-methylol group with water dissociation, the reaction of an hydroxyl group with an N-methylolether group with dissociation of the etherification alcohol, the transesterification reaction of an hydroxyl group with an ester group with dissociation of the esterification alcohol, the trans-urethanization reaction of an hydroxyl group with a carbamate group with alcohol dissociation, the reaction of a carbamate group with an N-methylolether group with dissociation of the etherification alcohol, the addition of an amino group to an epoxy group with ring opening and formation of a hydroxyl group and the addition reaction of an amino group or of an acetoacetyl group to a group with olefinic double bonds, e.g., an acryloyl group.

The resin solids of the coating agents may contain, in addition to the binder system chemically cross-linkable by free-radical polymerization of olefinic double bonds, components not capable of free-radical polymerization, namely binders not capable of free-radical polymerization, reactive thinners not capable of free-radical polymerization and/or hardeners not capable of free-radical polymerization.

The binders not capable of free-radical polymerization may be physically drying binders, i.e., binders curing solely by release of solvent and/or water from the applied coating layer, and/or binders having functional groups capable of chemical cross-linking by addition and/or condensation reactions, for example, the addition and/or condensation reactions mentioned above.

Examples of binders not capable of free-radical polymerization include corresponding polyurethane, alkyd, polyester and/or (meth)acrylic copolymer resins that may carry, as functional groups, for example, hydroxyl groups corresponding to an hydroxyl value of, for example, 50 to 250 mg KOH/g.

Reactive thinners not capable of free-radical polymerization are compounds that may be chemically bound in the coating layer by means of addition and/or condensation reactions, for example, those mentioned above. If, for example, binders having hydroxyl groups and not capable of free-radical polymerization are a component of the resin solids, compounds having at least two hydroxyl groups per molecule and hydroxyl values in the range of, for example, 250 to 700 mg KOH/g may be contained as hydroxyl-functional reactive thinners. Examples include corresponding polyether polyols, oligoester polyols, polycarbonate polyols and oligourethane polyols.

Hardeners not capable of free-radical polymerization are contained only in dual-cure coating agents. Hardeners not capable of free-radical polymerization are compounds having functional groups, which with regard to chemical cross-linking by addition and/or condensation reactions, assume a complementary reactive functionality towards the functional groups of the other components of the resin solids. If the resin solids contain, for example, hydroxy-functional components, appropriate compounds that are reactive towards hydroxyl groups are suitable as hardeners. Examples of hardeners that cross-link chemically with hydroxyl groups with addition include the polyisocyanates conventionally used in coating chemistry. Examples of hardeners that cross-link chemically with hydroxyl groups with condensation include the blocked polyisocyanates, aminoplastic resins, such as, melamine resins and transesterification cross-linking agents, each of which conventionally used in coating chemistry.

If the resin solids of the coating agent also contain, in addition to the binder system capable of free-radical polymerization, components which are not capable of free-radical polymerization having functional groups capable of addition and/or condensation reactions, chemical cross-linking reactions by addition and/or condensation are possible within individual components not capable of free-radical polymerization, between different components not capable of free-radical polymerization and/or optionally between components of the binder system capable of free-radical polymerization and components not capable of free-radical polymerization. If any of these possible combinations is present, the term dual-cure coating agent is also used.

The resin solids of the coating agents are composed of, for example, from 60 to 100 wt-% of a binder system capable of free-radical polymerization and from 0 to 40 wt-% of components not capable of free-radical polymerization. The resin solids are preferably composed of 100 wt-% of a binder system capable of free-radical polymerization.

The coating agents may be formulated as single-component coating agents or, dependent on the composition of the coating agents, as multicomponent coating agents which, in order to rule out premature chemical cross-linking, are stored separately from one another in several, for example, two components. Only shortly before application are these mixed together to form the coating agent ready for application.

The coating agents may be may be liquid, solvent- and/or water-containing coating compositions having a solids content (consisting of the resin solids plus the optional components: pigments, fillers, non-volatile additives) of, for example, 30 to below 100 wt.%, in particular from 40 to 80 wt.% or they are so-called 100% systems in the form of liquid, solvent- and water-free coating compositions or in the form of powder coatings. In the case of waterborne coating agents, the binders contained may be ionically or nonionically stabilized in order to obtain sufficient water dilutability. Alternatively or in addition, it is possible to achieve water dilutability by means of external emulsifiers.

The organic solvents optionally contained in liquid coating agents are conventional coating solvents. These may originate from the preparation of the binders or they are added separately. Examples of suitable solvents include mono- or polyhydric alcohols, e.g., propanol, butanol, hexanol; glycol ethers or esters, e.g., diethylene glycol dialkyl ether, dipropylene glycol dialkyl ether, in each case with C1- to C6-alkyl, ethoxy propanol, butyl glycol; glycols, e.g., ethylene glycol, propylene glycol and oligomers thereof, N-methylpyrrolidone and ketones, e.g., methyl ethyl ketone, acetone, cyclohexanone; esters, such as, butyl acetate, isobutyl acetate, amyl acetate, aromatic hydrocarbons and aliphatic hydrocarbons. If, in the case of waterborne coating agents, organic solvents are used in addition, these are preferably water-miscible solvents.

The coating agents contain at least one HALS compound. The HALS compounds are well-known to the man skilled in the art and include HALS compounds of the sterically hindered piperidine type as well as HALS compounds of the 3,3,5,5-polysubstituted morpholine-2-one type. The sterically hindered piperidine type HALS compounds are preferred. The coating agents contain the at least one HALS compound in an amount of, for example, 0.1 to 5 wt-%, preferably, 0.5 to 4 wt-%, based on the resin solids.

Apart from the at least one HALS compound the coating agents contain at least one metal compound selected from the group consisting of metal salt compounds containing the metal in the cation and/or anion of the compound, organometallic compounds, metal coordination compounds and combinations thereof. The metal compounds may comprise metal compounds comprising one or more different metals in the respective metal compound. The metal compounds may be used as a combination of metal compounds of one metal or as a combination of metal compounds of different metals. Salt compounds containing the metal in the cation shall include compounds where the metal itself forms the cation. The metal or metals comprise metals of groups 13 and 14 of the periodic system of elements or transition metals, which metals or transition metals are able to occur in at least 2 oxidation states other than zero. Oxidation states other than zero shall mean positive oxidation states.

The term "transition metal" means elements of groups 3 to 12 of the periodic system of elements, including the lanthanoides.

Examples of transition metals which may be used are, for example, titanium, vanadium, chromium, manganese, iron, cobalt, nickel, copper, niobium, molybdenum, palladium, tungsten, platinum and the lanthanoids, in particular, cerium. Especially preferred are titanium, vanadium, chromium, manganese, iron, cobalt, nickel, copper and cerium.

Preferred metal compounds are (transition) metal salts of an organic or inorganic acid.

Examples of organic acids on which the (transition) metal salts may be based are unsaturated higher fatty acids, such as, linseed oil fatty acid, tall oil fatty acid, soy oil fatty acid, resin acids (resinol acids), for example, based on diterpenes, such as, abietic, neoabietic, laevopimaric, pimaric and palustrinic acid and agathic acid, illuric acid and podocarpic acid, naphthenic acid, benzoic acid, acetic acid, oxalic acid and the isomers of octanoic acid, such as, in particular, 2-ethylhexanoic acid.

Examples of inorganic acids on which the (transition) metal salts may be based are sulfuric acid, phosphoric acid, boric acid, nitric acid and hydrochloric acid.

Substances which may readily be used as metal compound and which are also preferred are, for example, the drying agents (or driers) known to the coatings specialist. Drying agents are metal salts of organic acids soluble in organic solvents and binders, which are usually added to oxidatively curable materials to catalyze the transfer of oxygen from the air (according to DIN 55945). The so-called primary drying agents may here be added alone or in combination with secondary drying agents (drying auxiliaries).

Corresponding cobalt, vanadium, tin, iron, cerium, copper or manganese salts may, for example, preferably be used as primary drying agents. Secondary drying agents, which may be considered, are, for example, the corresponding strontium or calcium compounds. The drying agents and drying auxiliaries are obtainable as commercial products. Drying agents may, for example, be obtained from the company Borchers under the name Octa-Soligen^{®} for the corresponding octoates (for example, the primary drying agents Octa-Soligen^{®} cobalt and Octa-Soligen^{®} manganese) or under the name Soligen^{®} for the corresponding naphthenates. Further drying agents may, for example, be obtained under the name Valirex, for example, Valirex Co 6% D60 as cobalt octoate, from the company Corn Van Loocke, Belgium. It is also possible that commercially available drying agents contain combinations of primary and secondary drying agents, e.g., Octa-Soligen^{®}173 from Borchers, containing cobalt, zirconium and barium salts of octanoic acid, in particular of the 2-ethylhexanoic acid isomer.

The drying agents conventionally assume the form of solutions in organic solvents, for example, as a 1-30% solution, but may also be provided in solvent-free form.

Substances which may preferably be used as metal compound are cobalt, manganese, vanadium, iron, copper and cerium salts, in particular, the corresponding salts of naphthenic acid, benzoic acid, acetic acid, oxalic acid and octanoic acid, in particular, the 2-ethylhexanoic acid isomer. Cobalt octoates, manganese octoates, vanadium octoates, iron octoates and cerium octoates may in particular readily be used as well as cobalt naphtenates, manganese naphtenates, vanadium napthenates, iron naphthenates and cerium naphtenates.

Also, mixed (transition) metal salts, such as, for example, mixed (transition) metal salts of ethylhexanoic acid and naphthenic acid may be used (e.g., ethylhexanoic acid and naphthenic acid in a ratio of 1 mole : 1 mole).

The above-stated compounds may advantageously be combined, for example, with barium, calcium, strontium, zinc or zirconium salts (secondary drying agents), for example, the corresponding octoates or naphtenates, e.g., Octa-Soligen^{®} Zirkonium and Octa-Soligen^{®} Strontium from Borchers.

As already mentioned, organometallic compounds and metal coordination compounds may also in principle be used as metal compound. Organometallic compounds are compounds having a direct covalent bonding between a metal atom and a carbon atom of an organic group. Examples of organometallic compounds, which may be used are disclosed in U.S. 5,212,210.

Examples of metal coordination compounds are metal chelates. Metal chelates are compounds where a single ligand occupies more than one coordination position at the central metal atom. Examples of metal chelates are metal acetyl acetonates, such as, vanadium acetyl acetonate and manganese acetyl acetonate.

It goes without saying that also mixed forms of the above mentioned metal salts, organometallic compounds and metal coordination compounds may be used as metal compound, e.g., metal coordination compounds in form of a salt.

As already mentioned, the metal compounds may be used individually or in combination. The coating compositions contain the at least one metal compound preferably according to a proportion of 10⁻⁵ to 10⁻¹ mol of metal (total of the mols of the corresponding metals and transition metals) per 100 g resin solids of the coating composition. The at least one metal compound is most preferably used in quantities such that a metal content of 10⁻⁴ to 5x10⁻² mol of metal per 100 g resin solids of the coating composition is obtained.

Preferably, the coating compositions contain no beta-diketones.

The coating agents preferably contain at least one radical initiator capable of thermal activation and which decomposes at different temperatures depending on the initiator type. Examples of such radical initiators include organic peroxides, such as, dialkyl peroxides, peroxocarboxylic acids, peroxodicarbonates, peroxy esters, hydroperoxides, ketone peroxides. Preferred as radical initiators are organic azo compounds or C-C splitting initiators, such as, azodinitriles or benzpinacol silyl ethers. Preferred use quantities of the radical initiators are from 0.1 to 5 wt-%, based on the resin solids.

The coating agents may be unpigmented coating agents, e.g., transparent clear coats or transparent sealing coating agents or pigmented coating agents. The term sealing coating agents should be understood in this context to mean coating agents that are applied to the external coating layer of a per se ready coated surface of a substrate in order to obtain, for example, a particular scratch resistance of a coating.

The coating agents may contain fillers (extenders) and/or transparent, color- and/or special effect-imparting pigments and/or soluble dyes. Examples of inorganic or organic color-imparting pigments include titanium dioxide, micronized titanium dioxide, iron oxide pigments, carbon black, azo pigments, phthalocyanine pigments, quinacridone or pyrrolopyrrole pigments. Examples of special effect-imparting pigments include metallic pigments, e.g., of aluminum, copper or other metals; interference pigments, such as, metal oxide-coated metallic pigments, e.g., titanium dioxide-coated or mixed oxide-coated aluminum, coated mica, such as, titanium dioxide-coated mica and graphite special-effect pigments. Examples of suitable fillers include silica, aluminum silicate, barium sulfate, calcium carbonate and talc.

In addition to the at least one HALS compound and the at least one metal compound and the radical initiator(s) contained in preference, the coating agents may contain further conventional coating additives in conventional amounts known to the skilled person, for example, of up to 5 wt-%, based on the resin solids. Examples of conventional coating additives include leveling agents, rheology-influencing agents, thickeners, defoamers, wetting agents, anti-crater agents, degassing agents, antioxidants, UV absorbers and photoinitiators.

Liquid coating agents may be prepared in the conventional manner by dispersion, mixing and/or homogenization of the individual constituents.

Powder coating agents may be prepared, for example, by extrusion of the powder coating ready formulated by dry mixing of all the required components in the form of a pasty melt, cooling the melt, coarse comminution, fine grinding and optionally, followed by sieving to the desired particle fineness. The coating agents in powder form may also be used as an aqueous powder coating slurry.

The coating agents may be used for the preparation of a one-layer coating. However, they are used preferably for the preparation of one or more coating layers of a multi-layer coating, for example, for the preparation of a primer, primer surfacer, base coat, clear coat, one-layer top coat and/or sealing layer. They are used preferably for the preparation of an external coating layer of a multi-layer coating, for example, for the preparation of a transparent clear coat or opaque pigmented top coat layer and/or transparent sealing layer.

According to a preferred embodiment, the coating agent is used as a clear coat coating agent for the preparation of an external clear coat layer on a pigmented base coat layer.

According to a further preferred embodiment, the coating agent is used as a transparent sealing coating agent for the preparation of an external sealing layer on a clear coat or on a top coat layer.

According to a further preferred embodiment, the coating agent is used as a top coat coating agent for the preparation of an external pigmented top coat layer on a one-layer or multi-layer precoated substrate, for example, a substrate coated with a primer and/or primer surfacer layer.

In the preparation of multi-layer coatings, at least one coating layer is applied from a coating agent as described above. Coating layers not applied from a coating agent as described above are applied from coating agents known to the skilled person and conventionally used for the preparation of corresponding coating layers of multi-layer coatings. For example, the coating layers to be applied first in the case of the preferred embodiments described above are applied from appropriate coating agents conventionally used for the application of the coating layers concerned and different from the coating agents as described above and optionally cured before the corresponding external coating layer is applied according to the process of the invention.

The coating agents may be applied to the entire surface or to a partial area of the surface of various, optionally already precoated substrates. Suitable substrates include any temperature-sensitive or temperature-non-sensitive substrates, for example, wood, wooden materials, metal, plastic or substrates of mixed construction of metal and plastics parts. Examples include automotive bodies and body parts, facade parts, window frames, exterior and interior furniture, domestic appliance housings.

The application of the coating agents in process step a) may take place according to conventional methods, preferably by spray application in a dry layer thickness of, for example, 10 µm to 80 µm, depending on the type of coating layer to be prepared.

If the coating agents are used in the preparation of multi-layer coatings, their application may also take place in the wet-in-wet process known to the skilled person wherein a coating layer is applied from the coating agent to at least one at least pre-dried but uncured coating layer and is cured together with said layer and/or wherein at least one further coating layer is applied to an optionally, at least pre-dried but uncured coating layer applied from the coating agent, and is cured together with the coating layer applied from the coating agent.

After process step a) has ended, process step b) of thermal curing of the coating layer applied in process step a) may follow immediately afterwards. Generally speaking, however, a short space of time of, for example, from 2 to 30 minutes is interposed between process steps a) and b), the purpose of which, depending on the nature of the applied coating agent is, for example, flashing off and/or leveling (in the case of liquid coating agents) or melting and leveling (in the case of powder coating agents). Such processes taking place during this space of time may be supported by the action of heat. For example, the object temperatures are 20°C to 120°C. In each case, however, the temperature falls below that which brings about an appreciable chemical cross-linking, particularly by free-radical polymerization. The temperature is, in particular, below the minimum temperature required for thermal curing in process step b).

In process step b) of the process according to the invention, thermal curing of the applied coating layer takes place by the application of heat. In so doing, coating layer temperatures or object temperatures are obtained that are sufficient to initiate and complete free-radical polymerization. The temperature curve during thermal curing may be constant or follow a course in several steps. The latter may be particularly expedient, for example, if a coating agent was used that does not cure exclusively by free-radical polymerization of olefinic double bonds but which is a dual-cure coating agent as described above. The object temperatures during process step b) are, for example, 60°C to 180°C.

The application of heat during thermal curing according to process step b) may take place with one or a combination of several conventional methods, for example, by infrared and/or near infrared irradiation and/or convection and/or induction heating (in the case of metal substrates). Infrared irradiation and/or convection are preferred.

The curing of the coating layer may be supported by the action of UV radiation before, during and/or after thermal curing according to process step b). It is preferable, however, to dispense with a supporting UV irradiation.

The process according to the invention is suitable for the preparation of coatings on substrates for exterior applications but also on substrates for interior applications, for example, if the latter are exposed to UV-rays of incident sunlight or of UV-ray emitting interior lights or if they are to be protected preventive against UV-rays.

The process according to the invention may be used advantageously in industrial and automotive coating.

Substrates, in particular industrially produced substrates, such as, automotive bodies may be provided with coatings that have the outstanding range of technological properties of weather-resistant coatings chemically cross-linked under UV radiation by free-radical polymerization of olefinic double bonds. The use of UV curing technology may be dispensed with, for example, curing may take place in baking ovens conventionally used in industrial OEM coating or in heated coating booths conventionally used for paint shops, or by means of conventional infrared radiators. The process according to the invention can be carried out in air atmosphere; there is no need to work under inert gas atmosphere.

The following examples illustrate the invention. The abbreviation "pbw" means - parts by weight-.

### Examples

### Production of a Solution of a Urethane Acrylate A):

An 80 wt-% solution of a urethane acrylate in butyl acetate was prepared by initially dissolving 0.125 mole of neopentyl glycol at 65°C in butyl acetate. 1 Mole of trimeric hexane diisocyanate was then added at 65°C and the batch was heated to 70°C. After the exothermic reaction had ended, heating was continued at 80°C until a constant NCO value was obtained. 4-Methoxyphenol (inhibitor) and dibutyltin dilaurate (catalyst) were then added in a quantity of 0.05 wt-% in each case, based on the total batch. 2.75 Moles of butane diol monoacrylate were added at 60°C in such a way that a temperature of 80°C was not exceeded. After an NCO value of < 0.1 was obtained, a solids content of 75 wt-% was then adjusted with butyl acetate.

### Production of Transparent Coating Compositions 1 to 6:

### Comparison Coating Composition 1:

Comparison coating composition 1 was produced by vigorously mixing the following components:
44.47 pbw (parts by weight) of the 75 wt-% solution of the urethane acrylate A)
11.12 pbw Ebecryl^{®} 5129 (conventional commercial aliphatic urethane acrylate from UCB)
1.33 pbw VAZO^{®} 88 (conventional commercial thermally cleavable azo initiator from DuPont)
0.11 pbw Byk^{®} 301 (conventional commercial flow additive from BYK)
0.45 pbw Byk^{®} 348 (conventional commercial surface additive based on polydimethylsiloxane from Byk)
0.56 pbw Tinuvin^{®} 400 (conventional commercial UV absorber from CIBA)
15.00 pbw butyl acetate

### Comparison Coating Composition 2:

Coating composition 1, additionally containing 1.11 pbw Tinuvin^{®} 292 (conventional commercial piperidine type HALS compound from CIBA).

### Coating Composition 3 (According to the Invention):

Coating composition 2, additionally containing 2.3 pbw Octa Soligen^{®} Fe 7/8 (conventional commercial drying agent based on the iron salt of 2-ethylhexanoic acid from Borchers).

### Coating Composition 4 (According to the Invention):

Coating composition 2, additionally containing 1.7 pbw Octa Soligen^{®} Mangan 10 (conventional commercial drying agent based on the manganese salt of 2-ethylhexanoic acid from Borchers)

### Comparison Coating Composition 5:

Coating composition 1, additionally containing 1.11 pbw of the 3,3,5,5-polysubstituted morpholin-2-one derivative according to U.S. 6,140,326, Example A 19 (as light stabilizer).

### Coating Composition 6 (According to the Invention):

Coating composition 5, additionally containing 2.3 pbw Octa Soligen^{®} Fe 7/8.

Coating compositions 1 to 7 were each knife-coated to a dry film thickness of 50 µm onto coil-coated steel test panels and after a 10 minute flash off at 80°C, the transparent coating layers were cured by heating for 20 minutes at 145°C (object temperature).

### Technological Properties of the Coatings Obtained

The cured coatings were tested with regard to hardness according to DIN EN ISO 1522:

| | Examples | | | | | |
|---|---|---|---|---|---|---|
| | 1 | 2 | 3 | 4 | 5 | 6 |
| Pendulum hardness according to DIN EN ISO 1522 (oscillations) | 111 | tacky | 131 | 115 | 108 | 133 |

## Claims

1. A process for the preparation of a coating layer comprising the steps:
(a) applying a coating layer to a substrate from a coating agent of which the resin solids comprise a binder system curable by free-radical polymerization of olefinic double bonds; and
(b) thermal curing of the applied coating layer,
wherein the coating agent contains at least one HALS (hindered amine light stabilizer) compound and at least one metal compound selected from the group consisting of metal salt compounds containing the metal in the cation or in the anion or in the cation and in the anion of the compound, organometallic compounds, metal coordination compounds and combinations thereof, wherein said metal or metals is/are selected from the group consisting of metals of groups 13 and 14 of the periodic system of elements and transition metals, which metals or transition metals are able to occur in at least 2 oxidation states other than zero.

2. The process of claim 1, wherein the at least one HALS compound is selected from the group consisting of HALS compounds of the sterically hindered piperidine type and HALS compounds of the 3,3,5,5-polysubstituted morpholine-2-one type.

3. The process of claim 1 or 2, wherein the at least one HALS compound is contained in an amount of 0.1 to 5 wt-%, based on the resin solids.

4. The process of any one of the preceding claims, wherein the metal or metals is/are selected from the group consisting of titanium, vanadium, chromium, manganese, iron, cobalt, nickel, copper and cerium.

5. The process of any one of the preceding claims, wherein the at least one metal compound is a metal salt of an organic or inorganic acid.

6. The process of claim 5, wherein the organic acid is selected from the group consisting of unsaturated higher fatty acids, resin acids, naphthenic acid, benzoic acid, acetic acid, oxalic acid and the isomers of octanoic acid.

7. The process of claim 5, wherein the inorganic acid is selected from the group consisting of sulfuric acid, phosphoric acid, boric acid, nitric acid and hydrochloric acid.

8. The process of claim 5, wherein the metal salt of an organic or inorganic acid is the cobalt, manganese, vanadium, iron, copper or cerium salt of naphthenic acid, benzoic acid, acetic acid, oxalic acid or octanoic acid.

9. The process of claim 5, wherein the metal salt is selected from the group consisting of cobalt octoates, manganese octoates, vanadium octoates, iron octoates, cerium octoates, cobalt naphtenates, manganese naphtenates, vanadium napthenates, iron naphthenates and cerium naphtenates.

10. The process of any one of the preceding claims, wherein the at least one metal compound is present in the coating composition according to a proportion of 10⁻⁵ to 10⁻¹ mol of metal per 100 g resin solids of the coating composition.

11. The process of claim 10, wherein the at least one metal compound is present in the coating composition according to a proportion of 10⁻⁴ to 5x10⁻² mol of metal per 100 g resin solids of the coating composition.

12. The process of any one of the preceding claims, wherein the coating agent contains at least one radical initiator capable of thermal activation.

13. The process of any one of the preceding claims, wherein the coating agent is selected from the group consisting of waterborne coating agents, solvent-based coating agents, solvent-free liquid coating agents, water-free liquid coating agents and powder coating agents.

14. The process of any one of the preceding claims, wherein the coating layer is applied as a one-layer coating.

15. The process of any one of claims 1 to 13, wherein the coating layer is applied as at least one coating layer of a multi-layer coating selected from the group consisting of primer, primer surfacer, base coat, clear coat, one-layer top coat and sealing layer.

16. The process of claim 15, wherein the coating layer is applied from a clear coat coating agent as an external clear coat layer onto a pigmented base coat layer.

17. The process of claim 15, wherein the coating layer is applied from a transparent sealing coating agent as a sealing layer onto a coating layer selected from the group consisting of clear coat and top coat layer.

18. The process of claim 15, wherein the coating layer is applied from a top coat coating agent as an external pigmented top coat layer onto a precoated substrate.

19. The process of any one of the preceding claims, wherein the substrates are substrates selected from the group consisting of automotive bodies and body parts.

20. The process of any one of the preceding claims, wherein thermal curing takes place by means of at least one type of application of heat selected from the group consisting of infrared irradiation and convection heating.

21. A substrate coated with a coating layer prepared according to a process of any one of the preceding claims.

## Patentansprüche

1. Verfahren für die Herstellung einer Beschichtungsschicht umfassend die Schritte des:
(a) Aufbringens einer Beschichtungsschicht auf ein Substrat aus einem Beschichtungsmittel, dessen Harzfeststoffe ein Bindemittelsystem umfassen, das durch Radikalpolymerisation olefinischer Doppelbindungen aushärtbar ist; und
(b) thermischen Aushärtens der aufgebrachten Beschichtungsschicht,
wobei das Beschichtungsmittel mindestens eine HALS- (gehinderte aminische Lichtstabilisator-) Verbindung und mindestens eine Metallverbindung ausgewählt aus der Gruppe bestehend aus Metallsalzverbindungen enthaltend das Metall in dem Kation oder in dem Anion oder in dem Kation und in dem Anion der Verbindung, Organometallverbindungen, Metallkoordinationsverbindungen und Kombinationen derselben enthält, wobei das Metall oder die Metalle aus der Gruppe ausgewählt ist/sind bestehend aus Metallen der Gruppen 13 und 14 des Periodensystems der Elemente und von Übergangsmetallen, welche Metalle oder Übergangsmetalle in der Lage sind, in mindestens 2 Oxidationszuständen, bei denen es sich nicht um null handelt, vorzukommen.

2. Verfahren nach Anspruch 1, wobei die mindestens eine HALS-Verbindung aus der Gruppe ausgewählt ist bestehend aus HALS-Verbindungen vom sterisch gehinderten Piperidintyp und HALS-Verbindungen vom 3,3,5,5,-polysubstituierten Morpholin-2-ontyp.

3. Verfahren nach Anspruch 1 oder 2, wobei die mindestens eine HALS-Verbindung in einer Menge von 0,1 bis 5 Gew.-%, auf die Harzfeststoffe bezogen, enthalten ist.

4. Verfahren nach einem der vorhergehenden Ansprüche, wobei das Metall oder die Metalle aus der Gruppe ausgewählt ist/sind bestehend aus Titan, Vanadium, Chrom, Mangan, Eisen, Kobalt, Nickel, Kupfer und Cer.

5. Verfahren nach einem der vorhergehenden Ansprüche, wobei die mindestens eine Metallverbindung ein Metallsalz einer organischen oder anorganischen Säure ist.

6. Verfahren nach Anspruch 5, wobei die organische Säure aus der Gruppe ausgewählt ist bestehend aus ungesättigten höheren Fettsäuren, Harzsäuren, Naphthensäure, Benzoesäure, Essigsäure, Oxalsäure und den Isomeren der Octansäure.

7. Verfahren nach Anspruch 5, wobei die anorganische Säure aus der Gruppe ausgewählt ist bestehend aus Schwefelsäure, Phosphorsäure, Borsäure, Salpetersäure und Salzsäure.

8. Verfahren nach Anspruch 5, wobei das Metallsalz einer organischen oder anorganischen Säure das Kobalt-, Mangan-, Vanadium-, Eisen- Kupfer- oder Cersalz der Naphthensäure, Benzoesäure, Essigsäure, Oxalsäure oder Octansäure ist.

9. Verfahren nach Anspruch 5, wobei das Metallsalz aus der Gruppe ausgewählt ist bestehend aus Kobaltoctoaten, Manganoctoaten, Vanadiumoctoaten, Eisenoctoaten, Ceroctoaten, Kobaltnaphthenaten, Mangannaphthenaten, Vanadiumnapthenaten, Eisennaphthenaten und Cernaphthenaten.

10. Verfahren nach einem der vorhergehenden Ansprüche, wobei die mindestens eine Metallverbindung in der Beschichtungszusammensetzung in einem Anteil von 10⁻⁵ bis 10⁻¹ Mol Metall pro 100 g Harzfeststoffe der Beschichtungszusammensetzung vorliegt.

11. Verfahren nach Anspruch 10, wobei die mindestens eine Metallverbindung in der Beschichtungszusammensetzung in einem Anteil von 10⁻⁴ bis 5 x 10⁻² Mol Metall pro 100 g Harzfeststoffe der Beschichtungszusammensetzung vorliegt.

12. Verfahren nach einem der vorhergehenden Ansprüche, wobei das Beschichtungsmittel mindestens einen Radikalinitiator enthält, der der thermischen Aktivierung fähig ist.

13. Verfahren nach einem der vorhergehenden Ansprüche, wobei das Beschichtungsmittel aus der Gruppe ausgewählt ist bestehend aus Beschichtungsmitteln auf Wasserbasis, Beschichtungsmitteln auf Lösungsmittelbasis, lösungsmittelfreien flüssigen Beschichtungsmitteln, wasserfreien flüssigen Beschichtungsmitteln und Pulverbeschichtungsmitteln.

14. Verfahren nach einem der vorhergehenden Ansprüche, wobei die Beschichtungsschicht als einschichtige Beschichtung aufgebracht wird.

15. Verfahren nach einem der Ansprüche 1 bis 13, wobei die Beschichtungsschicht als mindestens eine Beschichtungsschicht einer mehrschichtigen Beschichtung ausgewählt aus der Gruppe ist bestehend aus Grundiermittel, Grundierspachtelbelag, Grundlack, Klarlack, einschichtigem Decklack oder Siegelschicht aufgebracht wird.

16. Verfahren nach Anspruch 15, wobei die Beschichtungsschicht aus einem Klarlackbeschichtungsmittel als äußerer Klarlackschicht auf einer pigmentierten Grundlackschicht aufgebracht wird.

17. Verfahren nach Anspruch 15, wobei die Beschichtungsschicht aus einem transparenten Versiegelungsbeschichtungsmittel als Versiegelungsschicht auf eine Beschichtungsschicht ausgewählt aus der Gruppe bestehend aus Klarlack und Decklackschicht aufgebracht wird.

18. Verfahren nach Anspruch 15, wobei die Beschichtungsschicht aus einem Decklackbeschichtungsmittel als äußerer pigmentierter Decklackschicht auf ein vorbeschichtetes Substrat aufgebracht wird.

19. Verfahren nach einem der vorhergehenden Ansprüche, wobei die Substrate Substrate sind, die ausgewählt sind aus der Gruppe bestehend aus Fahrzeugkarosserien und Fahrzeugteilen.

20. Verfahren nach einem der vorhergehenden Ansprüche, wobei das thermische Aushärten durch mindestens einen Typ der Anwendung von Hitze ausgewählt aus der Gruppe bestehend aus Infrarotstrahlung und Umwälzheizung erfolgt.

21. Substrat, das mit einer Beschichtungsschicht beschichtet ist, die einem Verfahren nach einem der vorhergehenden Ansprüche gemäß hergestellt ist.

## Revendications

1. Procédé de préparation d'une couche de revêtement comprenant les étapes :
(a) d'application d'une couche de revêtement à un substrat à partir d'un agent de revêtement dont les solides de type résine comprennent un système liant durcissable par polymérisation radicalaire de doubles liaisons oléfiniques ; et
(b) de durcissement thermique de la couche de revêtement appliquée, dans lequel l'agent de revêtement contient au moins un composé de type HALS (inhibiteur radicalaire) et au moins un composé métallique choisi parmi le groupe constitué des composés de type sel métallique contenant le métal dans le cation ou dans l'anion ou dans le cation et dans l'anion du composé, des composés organométalliques, des composés de coordination de métaux et des combinaisons de ceux-ci, dans lequel ledit métal ou lesdits métaux est/sont choisi(s) parmi le groupe constitué des métaux des groupes 13 et 14 du système périodique des éléments et des métaux de transition, lesquels métaux ou métaux de transition sont capables de se produire en au moins deux états d'oxydation autres que zéro.

2. Procédé selon la revendication 1, dans lequel le au moins un composé de type HALS est choisi parmi le groupe constitué des composés de type HALS du type pipéridine stériquement bloquée et des composés de type HALS du type morpholin-2-one 3,3,5,5-polysubstituée.

3. Procédé selon la revendication 1 ou 2, dans lequel le au moins un composé de type HALS est contenu en une quantité de 0,1 à 5 % en pds, basé sur les solides de type résine.

4. Procédé selon l'une quelconque des revendications précédentes, dans lequel le métal ou les métaux est/sont choisi(s) parmi le groupe constitué du titane, vanadium, chrome, manganèse, fer, cobalt, nickel, cuivre et cérium.

5. Procédé selon l'une quelconque des revendications précédentes, dans lequel le au moins un composé métallique est un sel métallique d'un acide organique ou inorganique.

6. Procédé selon la revendication 5, dans lequel l'acide organique est choisi parmi le groupe constitué des acides gras supérieurs insaturés, des acides de type résine, de l'acide naphténique, de l'acide benzoïque, de l'acide acétique, de l'acide oxalique et des isomères de l'acide octanoïque.

7. Procédé selon la revendication 5, dans lequel l'acide inorganique est choisi parmi le groupe constitué de l'acide sulfurique, acide phosphorique, acide borique, acide nitrique et de l'acide chlorhydrique.

8. Procédé selon la revendication 5, dans lequel le sel métallique d'un acide organique ou inorganique est le sel de cobalt, de manganèse, de vanadium, de fer, de cuivre ou de cérium de l'acide naphténique, de l'acide benzoïque, de l'acide acétique, de l'acide oxalique ou de l'acide octanoïque.

9. Procédé selon la revendication 5, dans lequel le sel métallique est choisi parmi le groupe constitué des octoates de cobalt, des octoates de manganèse, des octoates de vanadium, des octoates de fer, des octoates de cérium, des naphténates de cobalt, des naphténates de manganèse, des naphténates de vanadium, des naphténates de fer et des naphténates de cérium.

10. Procédé selon l'une quelconque des revendications précédentes, dans lequel le au moins un composé métallique est présent dans la composition de revêtement selon une proportion de 10⁻⁵ à 10⁻¹ mole de métal pour 100 g de solides de type résine de la composition de revêtement.

11. Procédé selon la revendication 10, dans lequel le au moins un composé métallique est présent dans la composition de revêtement selon une proportion de 10⁻⁴ jusqu'à 5 x 10⁻² mole de métal pour 100 g de solides de type résine de la composition de revêtement.

12. Procédé selon l'une quelconque des revendications précédentes, dans lequel l'agent de revêtement contient au moins un initiateur de radicaux capable d'activation thermique.

13. Procédé selon l'une quelconque des revendications précédentes, dans lequel l'agent de revêtement est choisi parmi le groupe constitué des agents de revêtement aqueux, des agents de revêtement à base de solvant, des agents de revêtement liquides sans solvant, des agents de revêtement liquides sans eau et des agents de revêtement en poudre.

14. Procédé selon l'une quelconque des revendications précédentes, dans lequel la couche de revêtement est appliquée en revêtement monocouche.

15. Procédé selon l'une quelconque des revendications 1 à 13, dans lequel la couche de revêtement est appliquée en au moins une couche de revêtement d'un revêtement multicouche choisi parmi le groupe constitué d'une amorce, d'un apprêt d'accrochage, d'une couche de fond, d'une couche claire, d'une couche de finition monocouche et d'une couche d'étanchéité.

16. Procédé selon la revendication 15, dans lequel la couche de revêtement est appliquée à partir d'un agent de revêtement de couche claire comme couche de revêtement claire externe sur une couche de revêtement de fond pigmentée.

17. Procédé selon la revendication 15, dans lequel la couche de revêtement est appliquée à partir d'un agent de revêtement transparent d'étanchéité comme couche d'étanchéité sur une couche de revêtement choisie parmi le groupe constitué d'une couche de revêtement clair et d'une couche de revêtement de finition.

18. Procédé selon la revendication 15, dans lequel la couche de revêtement est appliquée à partir d'un agent de revêtement de couche de finition comme agent de revêtement de finition pigmenté externe sur un substrat prérevêtu.

19. Procédé selon l'une quelconque des revendications précédentes, dans lequel les substrats sont des substrats choisis parmi le groupe constitué des carrosseries automobiles et des pièces pour automobile.

20. Procédé selon l'une quelconque des revendications précédentes, dans lequel le durcissement thermique a lieu au moyen d'au moins un type d'application de chaleur choisi parmi le groupe constitué de l'irradiation infrarouge et du chauffage par convection.

21. Substrat revêtu avec une couche de revêtement préparée selon un procédé selon l'une quelconque des revendications précédentes.
